# EUROPEAN PATENT APPLICATION

(11) **EP 1 396 702 A1**
(43) Date of publication of application: **10.03.2004**
(21) Application number: 02020176.0
(22) Date of filing: 09.09.2002
(51) Int. Cl.: G01C 21/26, G01C 21/28, G01S 5/14, H04L 29/06

(54) **Method and system for determining speed data in an in-vehicle computer system**

(71) Applicant: ComRoad AG, 85716 Unterschleissheim (DE)
(72) Inventor: Miljevic, Nedeljko, 85356 Freising (DE)
(74) Representative: Ganahl, Bernhard

(57) **Abstract**

A method for determining speed data in an in-vehicle computer system comprising the steps of receiving a first signal from a speedometer, said first signal representing an actual speed of a vehicle, receiving a second signal from a standardized geographical positioning system, said second signal also representing said actual speed of said vehicle, wherein said first signal from said speedometer is calibrated with said corresponding second signal and speed data representing said actual speed of said vehicle is determined based on said calibrated first signal. The present invention therefore has the advantage that it avoids adjustments of the speedometer signal input of the in-vehicle computer systems according to the different vehicle types thus reducing the installation and service costs of in-vehicle computer systems. Moreover, because of its flexibility it can be implemented in current in vehicle computer systems for improving the performance and reliability of such systems.

## Description

### Field of the Invention

The invention generally relates to an in-vehicle computer system and in particular to a method and device for determining speed data in an in-vehicle computer system.

### BACKGROUND OF THE INVENTION

The automobile industry utilizes more and more computer technology to develop and produce vehicles with new functions and features.

For example, programmed controllers or computer modules have been developed that control or support various engine functions, such as fuel injection, timing and so on. Currently the automobile industry offers dynamic off-board navigation, Internet in the car, telephone and security services or entertainment for the vehicles. Conventional in-vehicle navigation systems enable access to a great variety of services as they are integrated in a single in-vehicle computer system. According to the requirements, a user can choose between dynamic off-board navigation, comprehensive security packages and active anti-theft devices, as well as telephone, SMS and e-mail communication. In addition, the Internet connection of the car offers, any time instant access to the information in the World Wide Web. Special telematic browsers included in the in-vehicle computer systems even allow to configure an individual information portal for instance news, sports, the weather forecast, the cheapest gas station on the way and so on.

The sophistication of these enhancements has advanced as the processing power available for these purposes has increased. It is expected that in the future more aspects of the mechanical equipment in vehicles will be controlled or supported by processors or controllers in order to enhance performance, reliability, and safety, to reduce emissions, and so on.

Aside from using computer technology to support various mechanical functions in vehicles, processors, controllers, or other program computer-based technologies are used in vehicles e.g. for car phones, entertainment equipment (such as CD players), in-vehicle navigation systems and emergency road side assistance systems. In addition, new kinds of equipment that provide entirely new features may become available in vehicles.

The vehicles are either factory-made equipped with such an in-vehicle system or the user of the vehicle may install such an in-vehicle computer system afterwards. As the development of the in-vehicle computer system is a very rapid one, the portfolio of product functions increases drastically year by year. Therefore, many of these devices are changed or equipped afterwards to increase the functionality of the vehicles. To cover applications such as fleet applications, security applications or information or call centers this in-vehicle computer systems have to provide functions like position transmission according to time or distance intervals, position transmission upon leaving a pre-defined area, analog and digital information being read out from or to the vehicle, full function hands-free speaking, silent call functions, etc. For this the devices have to be connected to several mechanical or electronic components of the vehicle. For this the in-vehicle computer systems have to provide a flexibility to fit into a variety of vehicles.

### OBJECT OF THE INVENTION

The present invention aims to provide an improved method and device for an in-vehicle computer system for determining speed data with a specific accuracy regardless of the presence or accuracy of the GPS signal. Furthermore, it is an objective of the present invention that the improved method and device fits into a variety of vehicles without further adjustments.

### SUMMARY OF THE INVENTION

According to the present invention, there is provided a method and device for determining speed data in an in-vehicle computer system as claimed in claims 1 and 10.

The present invention is based on the insight that since the vehicles are different and provide speedometers with unknown characteristics, a self-calibrating method can be used to compute speed data based on the speedometer input of the in-vehicle computer system. Thus an adjustment of the speedometer signal input of the in-vehicle computer system is avoided when the in-vehicle computer system is installed in the vehicle.

In one embodiment there is provided a method for determining speed data in an in-vehicle computer system, which comprises the steps of receiving a first signal from a speedometer, said first signal representing an actual speed of a vehicle, receiving a second signal from a standardized geographical positioning system, the second signal also representing the actual speed of the vehicle, calibrating the first signal from the speedometer with the corresponding second signal and determining speed data representing the actual speed of the vehicle based on the calibrated first signal.

In another embodiment there is provided a method for determining speed data in an in-vehicle computer system, which comprises the steps of receiving a first signal from a speedometer, the first signal representing an actual speed of a vehicle, receiving a second signal from a standardized geographical positioning system, a second signal also representing the actual speed of the vehicle, calibrating the first signal from the speedometer with the corresponding second signal and determining speed data representing said actual speed of the vehicle based on the calibrated first signal. Additionally, at least two different data sets are stored comprising a first and a second data representing that first and second signal. These stored data sets form a look-up table and the speed data representing the actual speed of the vehicle is determined by interpolating and extrapolating the stored data sets. Furthermore, a quality value of the second signal is stored in the data set and a stored first data set is replaced by a corresponding second data set in the event that the quality value in the second data set is lower or higher than the stored first data set. Preferably, the standardized geographical positioning system is a GPS system which provides a PDOP (Positional Delusion of Precision) value corresponding to the second signal from the GPS system, and the PDOP value is stored as the quality value in the data sets together with the first and second data. Additionally, an initial look-up table is provided comprising initial data sets, which include at least initial first data and initial second data for determining the speed data representing the actual speed of the vehicle and which is replaced by newly determined data sets.

In another embodiment there is provided an in-vehicle computer system which comprises means for determining speed data, that comprises interface means for receiving a first signal from a speedometer, the first signal representing an actual speed of a vehicle, interface means for receiving a second signal from a standardized geographical positioning system, the second signal also representing the actual speed of the vehicle, calibrating means for calibrating the first signal from the speedometer with the corresponding second signal and determining means for determining speed data representing the actual speed of the vehicle based on the calibrated first signal.

The present invention therefore has the advantage that it avoids adjustments of the speedometer signal input of the in-vehicle computer systems according to the different vehicle types thus reducing the installation and service costs of in-vehicle computer systems. Moreover, because of its flexibility it can be implemented in current in vehicle computer systems for improving the performance and reliability of such systems.

### BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following, and more particular description of the invention as illustrated in the accompanying drawings, wherein:
- FIG. 1: is a schematic diagram of the preferred embodiment of the present invention;
- FIG. 2: is a flow chart showing the steps of calibrating speed data according to the preferred embodiment of the present invention;
- FIG.3: is a schematic diagram illustrating the calibration function or the speedometer signal according to the preferred embodiment of the present invention;
- FIG. 4: is a schematic diagram of a look-up table of the preferred embodiment of the present invention;
- FIG. 5: is a flow chart showing the steps of determining speed data according to the preferred embodiment of the present invention.

### DETAILED DESCRIPTION OF THE PRESENT INVENTION

The illustrative embodiments of the present invention will be described with reference to the figure drawings, wherein like element structures are indicated with like reference numbers.

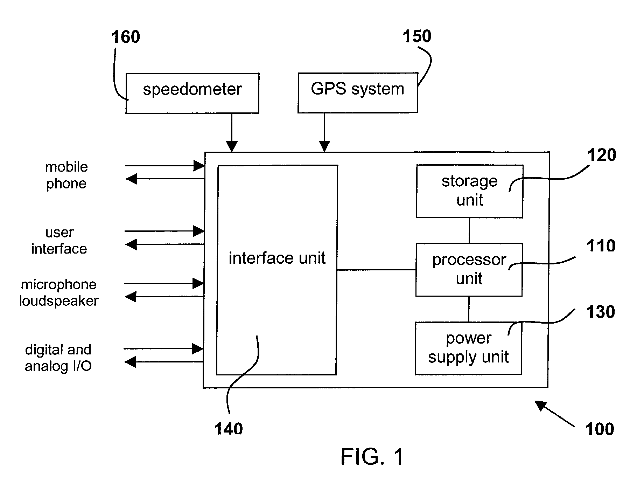

Referring now to the drawings, FIG. 1 shows a schematic diagram of a preferred embodiment of the present invention. The in-vehicle computer system 100 comprises a processor unit 110, a storage unit 120, a power supply unit 130 and an interface unit 140, which are connected to each other. The processor unit 110 processes the data received via the interface unit and stores it in the storage unit 120. The interface unit 140 receives signals from the speedometer 160 and from the GPS system 150. Furthermore, the interface unit receives signals from a mobile phone or a GSM receiver. Moreover, it provides ports for user interfaces such as user displays or keyboards. Additionally the interface unit provides output ports for loudspeakers and input ports for a microphone. Additionally, a number of digital and analog input and output ports are provided for operating and monitoring specific functions in the vehicle.

The in-vehicle computer system is preferably operated via touch screen. Incoming information such as new traffic information received via GSM or FM when using vehicle navigation is preferably read out to the driver via voice. For this it provides a GSM modem or a GSM receiver for receiving speech, data and SMS. In an alternative of the preferred embodiment additionally a TMC-equipped FM receiver is comprised in the in-vehicle computer system for receiving silently decoded data messages. Alternatively a receiver for digital audio broadcasting is included in the in-vehicle computer for providing additional information concerning traffic, weather or other news. Furthermore, a GPS-GSM combination antenna is preferably included for frequencies such as 800 MHz, 1 800 MHz and 1 900 MHz.

A special telematic browser also included in the system allows configuring individual information, for instance news, sports, weather forecasts, the cheapest gas station on the way, the preferred restaurant or hotel at the station etc. The operating system of the in-vehicle system is preferably proprietary real-time or alternatively based on embedded Linux, QNX or Microsoft technology. Additionally, the in-vehicle computer system is connectable to pocket PC or PDA.

The speedometer 160 usually provides an analog signal corresponding to the actual speed of the vehicle. Commercial speedometers modulate the analog signal with a frequency that corresponds to the actual speed of the vehicle. This analog speed output is connected to the interface unit 140, which converts the analog frequency signal preferably with an AD converter or a frequency converter to a digital signal. This digital signal corresponding to the actual speed provided by the speedometer is forwarded to the processor unit 110.

The GPS system 150 alternatively being an external GPS system or being included in the in-vehicle computer system, preferably provides a digital, serial signal to the interface unit 140 including data representing the actual speed of the vehicle. This signal is input to the interface unit 140 and forwarded to the processor unit 110 as the second digital signal representing the actual speed of the vehicle.

Preferably the GPS system 150 outputs the digital signals in a format according to NMEA (National Marine Electronics Association) standard. The NMEA-0183 standard is a serial communications standard for the encoding and sending of GPS and other navigation information between devices. Under the NMEA-0183 standard, all characters used are printable ASCII text. NMEA-0183 data is sent at 4800 baud. This standard allows individual manufacturers to define proprietary sentence formats.

The storage unit preferably stores the operation system in a flash memory. The stored speedometer and GPS system data is stored in a Random Access Memory. Alternatively, the storage unit furthermore comprises a hard disk or a CD ROM drive for providing additional data and functions for the processor unit or storing the operation system for the in-vehicle computer system.

As above mentioned the processor unit 110 receives signals from the speedometer and the GPS system via the interface unit and calibrates the signal from the speedometer with the corresponding signal from the GPS system to determine speed data representing the actual speed of the vehicle, which will be described in the following.

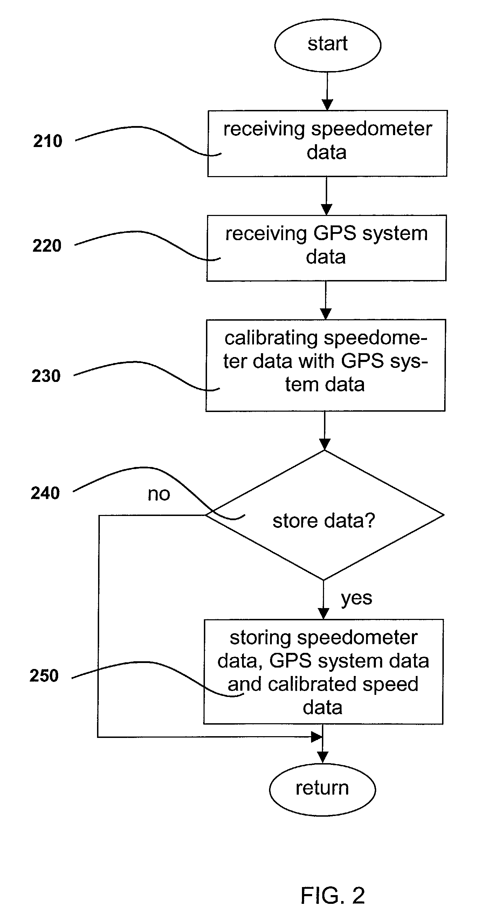

FIG. 2 illustrates a flow chart showing the steps of calibrating and storing the speedometer and GPS data. In step 210 the interface unit 140 receives the signals from the speedometer. As above described the speedometer signal is preferably a frequency modulated signal, which is converted to a digital signal representing the speed data from the speedometer. At step the interface unit 140 receives 210 signals from the GPS system 150. As described above the GPS system signal is preferably a digital, serial signal, which provides the actual time of the GPS system, latitude and longitude information, information about the actual speed and information about the quality of the GPS signal (PDOP signal).

The delusion of precision (DOP) is the mathematical representation of the quality of GPS data being received from satellites. DOP is mainly controlled by the number of visible satellites and their relative positions in the sky. The most commonly used delusion of precision is positioned illusion of precision (PDOP), which is a combination of horizontal delusion of precision (HDOP) and vertical delusion of precision (VDOP). A PDOP value of one indicates an optimum satellite constellation and high-quality data. The quality of the data decreases as the PDOP value increases. PDOP of around 8 are considered poor.

Both speedometer data and GPS system data, is forwarded to the processor unit. In step 230 the speedometer data is calibrated with a GPS system data by dividing the determined frequency, with which the speedometer signal is modulate, through the velocity determined by the GPS system. Thus a value is obtained for the relation of frequency of the speedometer signal and the actual speed of the vehicle. In that way the determined frequency from the speedometer signal is usable for determining the actual speed of the vehicle without the need for manual adjustment of the relation of the frequency of the speedometer signal and the speed of the vehicle.

In step 240 the processor unit 110 checks the look-up table in the storage unit 120 whether there is still enough memory to store the actual determined and calibrated speed data together with the corresponding pedometer data and GPS system data. Furthermore the processor unit determines whether there is already stored a data set in the look-up table for that current determined speed interval. If there is already stored a data set within that actual determined speed interval, the PDOP value of the stored data set and the PDOP value of the actual determined data set is compared. If the PDOP value of the actual determined data set is smaller than the PDOP value of the stored data set the stored data set is replaced by the actual determined data set. In this way the look-up table is continuously updated and the quality and the precision of the data stored in the look-up table is continuously improved.

In the case that there is not enough memory or the PDOP value of the actual determined data set is higher than the PDOP value of the stored data set the calibrating and storing sequence is stopped. Otherwise at least the speedometer data, the GPS system data together with the PDOP value and the calibrated speed data are stored in the look-up table in the storage unit 120.

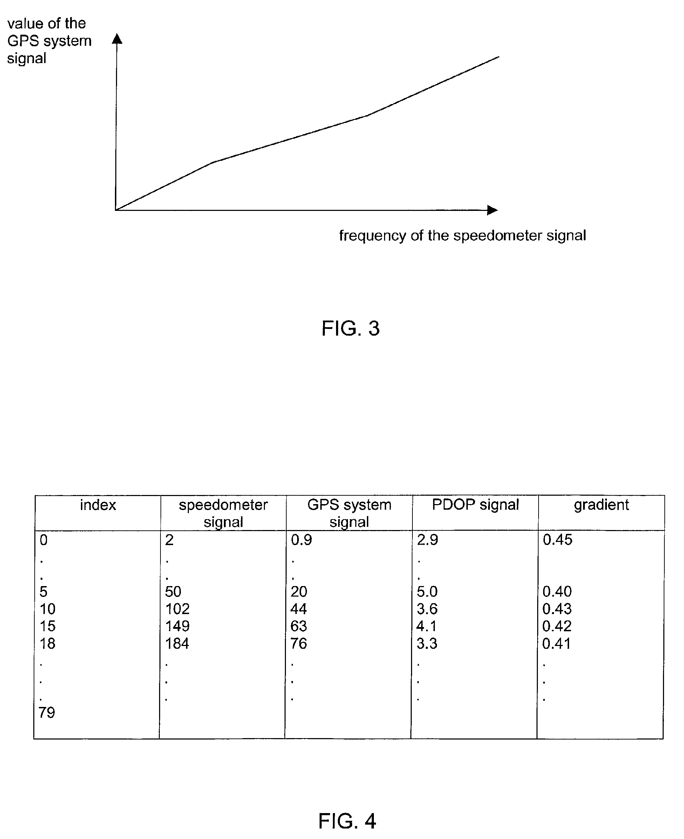

FIG. 3 illustrates the transfer characteristics of the frequency of the speedometer signal to the value of the GPS system signal according to the preferred embodiment of the present invention. The self-calibrating speed calculation is preferably based on a linear interpolation and is calibrated using velocity data of the GPS system. As described above it is assumed that the speed sensor of the speedometer provides pulses with a frequency, which is dependent on the speed of the vehicle. These frequency-modulated pulses are preferably converted into an integer value containing the counted pulses per second by the interface unit 140.

The potentially unknown transfer characteristics v = g(f) of the vehicle velocity v and the frequency f of the speedometer signal is divided into a set of linearized intervals on the frequency axis. The speed is calculated by multiplying the determined frequency by the gradient of the line of the particular interval. For this every frequency interval has a gradient and a PDOP value associated with it.

Preferably the look-up table provides frequency values up to 800 Hz in 10 Hz steps, but this can be configured to the computing resources of the in-vehicle computer system. Initially the look-up table is set to a set of values that represent a linear transfer characteristic suitable for use in a car. Preferably these initial data sets include at least initial, representative speedometer data, initial GPS system velocity data a virtual PDOP value and a virtual calibrated speed data. This initial look-up table is preferably used for the further data processing, wherein actual data sets are stored and replaced in this initial look-up table. Alternatively a second look-up table is used for storing the actual determined data sets. The initial look-up table is used to determine the actual speed data as long as the in-vehicle computer system has not stored a sufficient large or specific number of new data sets with PDOP values low enough to determine the actual speed data within a specific accuracy. Alternatively a threshold value is defined for this accuracy of the speed data in accordance with the PDOP value.

FIG. 4 illustrates one alternative of a stored look-up table according to the preferred embodiment of the present invention. In accordance with this alternative a fixed number of data sets is defined. Each data set is representing one speed interval. These speed intervals are identified by index values. The determined speedometer data and GPS system data is stored in accordance to the determined speed interval together with the corresponding index value. In the illustrated example 80 different speed intervals are defined with index values between 0 and 79. The frequency value obtained from the speedometer signal is divided in intervals to 10 Hz. Therefore data, which corresponds to frequency value of the speedometer signal between 50 and 59 Hz, will be stored with an index value of 5. The corresponding GPS system data and PDOP signal are stored together with the calibrated signal, the gradient in the look-up table under this index value. Once the values for the corresponding speed intervals are stored in the look-up table the actual speed data is determined effectively by the processor unit 110 as mentioned above.

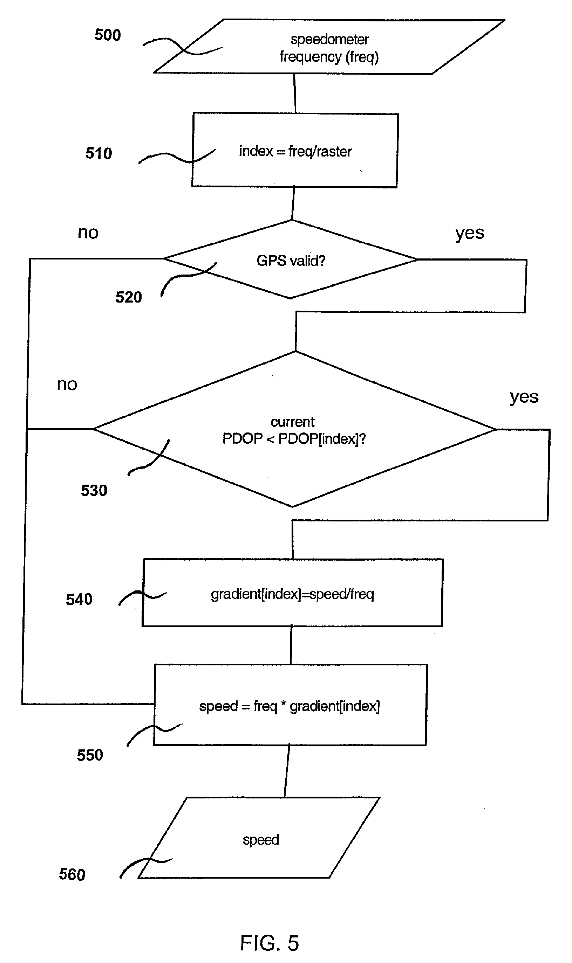

FIG. 5 illustrates in a flow chart the determining of the actual speed in accordance with a preferred embodiment of the present invention. In step 500 the speedometer data is determined as described above representing the frequency of the speedometer signal in accordance to the actual speed of the vehicle. In step 510 the index is determined by taking the integer value of the frequency divided by the value of the speed interval. Once the index value is determined in step 510 the next step 520 it is checked whether there is a valid signal from the GPS system. If there is a valid signal from the GPS system the PDOP value of the stored data set corresponding to the determined index value is compared with the actual determined PDOP value corresponding to the actual speed data from the GPS system in step 530. If the actual determined PDOP value is smaller than the stored PDOP value, the stored data set will be replaced by the actual determined data set as mentioned above. If the PDOP value of the stored data set is lower than the actual determined PDOP value the stored gradient is retrieved from the look-up table in step 540. In step 550 the retrieved gradient is multiplied with the above-determined frequency of the speedometer. In such a way, the actual speed of the vehicle is determined and outputted in step 560.

Preferably the above described sequence is repeated every second, when the GPS system is set to measure and provide signals every second.

Alternatively to the above described multiplication of the frequency with the stored gradient, the actual speed data is determined by interpolating or extrapolating the stored speedometer data and GPS system data with linear or polynomial functions. By using this alternative no gradients need to be stored.

In a further alternative to the preferred embodiment of the present invention a corresponding initial table for the speed data calculation is stored on a server for every vehicle type an this server is connected to a computer or telecommunication network. This initial table is retrieved by the in-vehicle computer system via a wireless telecommunication network from the server on demand or via a unit console interface connected to the in-vehicle computer system. Since the in-vehicle computer system can be mounted in different types of vehicles, the table corresponding to the vehicle is selected by an identifier selected via the unit console interface or automatically by a characteristic ratio of the speedometer data to the GPS system data.

In an additional alternative to the preferred embodiment of the present invention the determined Speed data are used to determine the travelled distance at least for a specific period, e.g. when the vehicle is passing a tunnel and no signals from the GPS satellites is received. As the calibrated speed data provide a high accuracy a navigation computer using this calibrated speed data needs less error correction for matching the actual vehicle position with a road map.

It is contemplated that the above-mentioned embodiments of the present invention are not restricted only to GPS GLONASS or Galileo for determining an actual speed value but also work on the basis of a cellular network infrastructure- or a combination of the two methods.

Furthermore, the above-mentioned embodiments of the present invention are not limited to solely use and in vehicle computer system, but also can use an on-board navigation system or off-board navigation system in combination with the above described in-vehicle computer system.

## Claims

1. A method for determining speed data in an in-vehicle computer system comprising the steps of
receiving a first signal from a speedometer, said first signal representing an actual speed of a vehicle,
receiving a second signal from a standardized geographical positioning system, said second signal also representing said actual speed of said vehicle,
**characterized by**
calibrating said first signal from said speedometer with said corresponding second signal and
determining speed data representing said actual speed of said vehicle based on said calibrated first signal.

2. The method for determining speed data as claimed in claim 1, wherein at least two different data sets are stored comprising at least first and second data representing said first and said second signal.

3. The method for determining speed data as claimed in claim 2, wherein said stored data sets form a look-up table and said speed data representing said actual speed of said vehicle are determined by interpolating or extrapolating said stored data sets.

4. The method for determining speed data as claimed in any of claims 2 or 3, wherein furthermore a quality value of said second signal is stored in said data set and a stored first data set is replaced by a corresponding second data set in the event that said quality value in said second data set is lower or higher than that in said stored first data set.

5. The method for determining speed data as claimed in claim 4, wherein said standardized geographical positioning system is a GPS system, which provides a PDOP (Positional Dilution of Precision) value corresponding to said second signal from said GPS system, and said PDOP value is stored as said quality value in said data sets together with said first and second data.

6. The method for determining speed data as claimed in claim 5, wherein an initial look-up table is provided comprising initial data sets, which include at least initial first data and initial second data for determining said speed data representing said actual speed of said vehicle and which are replaced by newly determined data sets.

7. The method for determining speed data as claimed in claim 5, wherein an initial look-up table is provided comprising initial data sets, which include at least initial first data and initial second data for determining said speed data representing said actual speed of said vehicle, said initial look-up table is used to determine speed data as long as said in-vehicle computer system has not stored a specific number of data sets with PDOP values below a specific threshold in a new look-up table.

8. The method for determining speed data as claimed in any of claims 6 or 7, wherein said additional initial look-up table is provided by a server via a wireless telecommunication network.

9. The method for determining speed data as claimed in any of claims 1 or 8, wherein said determined speed data are used to determine a traveled distance.

10. An in-vehicle computer system comprising means for determining speed data, comprising
interface means for receiving a first signal from a speedometer, said first signal representing an actual speed of a vehicle,
interface means for receiving a second signal from a standardized geographical positioning system, said second signal also representing said actual speed of said vehicle,
**characterized by**
calibrating means for calibrating said first signal from said speedometer with said corresponding second signal and
determining means for determining speed data representing said actual speed of said vehicle based on said calibrated first signal.

11. The in-vehicle computer system as claimed in claim 10, further comprising storing means for storing at least two different data sets comprising first and second data representing said first and said second signal, wherein said stored data sets form a look-up table, said standardized geographical positioning system is a GPS system which provides a PDOP (Positional Dilution of Precision) value corresponding to said second data from said GPS system, said PDOP value is stored in said data sets together with said first and second data and said determining means determine said speed data by interpolating or extrapolating said stored data sets.
